Europäisches Patentamt

European Patent Office

Office européen des brevets

(11) Numéro de publication: **0 179 701**
**A1**

## (12) DEMANDE DE BREVET EUROPEEN

(21) Numéro de dépôt: 85401926.2

(22) Date de dépôt: 02.10.85

(51) Int. Cl.⁴: **H04N 7/08**

(30) Priorité: 02.10.84 FR 8415124

(43) Date de publication de la demande:
**30.04.86 Bulletin 86/18**

(84) Etats contractants désignés:
**AT BE CH DE GB IT LI LU NL SE**

(71) Demandeur: **Guinet, Yves**
**18, rue Erlanger**
**F-75016 Paris(FR)**

(72) Inventeur: **Guinet, Yves**
**18, rue Erlanger**
**F-75016 Paris(FR)**

(74) Mandataire: **Mongrédien, André et al**
**c/o BREVATOME 25, rue de Ponthieu**
**F-75008 Paris(FR)**

(54) **Procédé de télévision pour programmes multilingues.**

(57) Procédé de télévision pour programmes multilingues.
Selon l'invention on modifie l'image d'origine (EVo) autour des centres phonateurs à l'aide de signes phonovisuels commandés par la voie sonore de traduction (ES't). Le hiatus entre le son (ES't) et l'image (EVt) est ainsi réduit.
Application en télévision.

FIG. 3

EP 0 179 701 A1

## PROCEDE DE TELEVISION POUR PROGRAMMES MULTILINGUES

La présente invention a pour objet un procédé de télévision pour programmes multilingues.

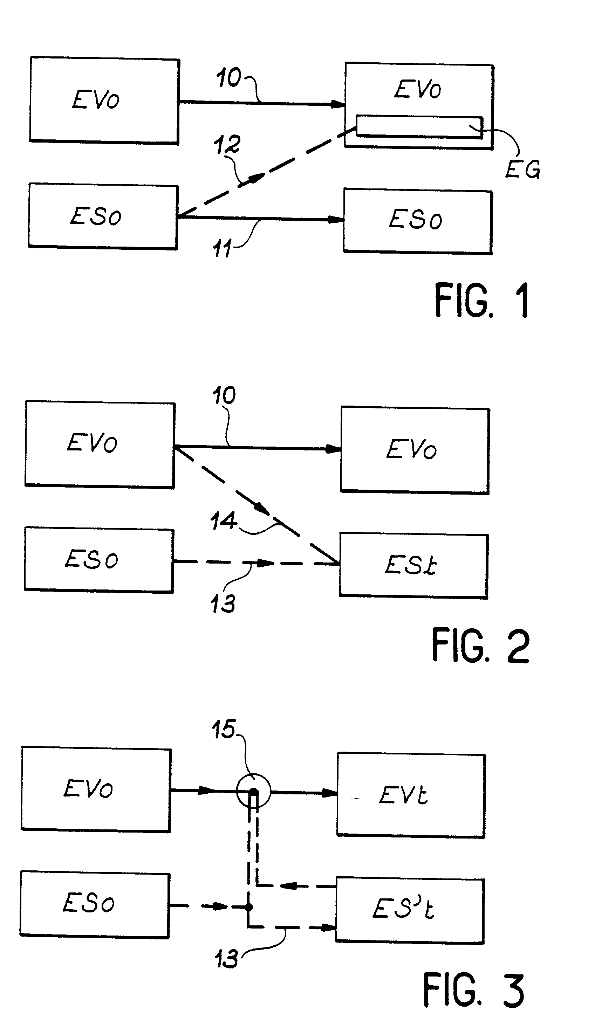

De tels programmes soulèvent des difficultés nombreuses qui tiennent essentiellement à ce qu'il faut compléter le message sonore d'origine, prononcé par les locuteurs intervenant dans la scène télévisée, par un message prononcé dans une langue différente. La technique actuelle fait appel à deux types de solutions. La première consiste à sous-titrer l'image télévisée. Le principe en est rappelé sur la figure 1. A l'émission, on dispose d'un "écran visuel" d'origine EVo constitué par l'image à téléviser et d'un "écran sonore" d'origine ESo constitué par les voix des locuteurs, auxquelles peuvent s'ajouter divers bruits d'ambiance et de bruitage. A la réception, l'écran visuel d'origine EVo est reproduit avec, en incrustation, un écran graphique de sous-titrage EG. L'écran sonore d'origine est également reproduit.

Les liaisons en trait continu 10 et 11 symbolisent la transmission sans altération des écrans visuel et sonore, et la liaison en tirets 12 la traduction de l'écran sonore d'origine ESo en un écran graphique de sous-titrage EG.

Une deuxième solution connue consiste à créer une ou des voies sonores de doublage. Le principe en est rappelé sur la figure 2. L'écran visuel d'origine EVo est encore reproduit sans modification. Mais un écran sonore traduit ESt est substitué à l'écran sonore d'origine. Cet écran sonore traduit est produit sous une double contrainte : d'une part, le message de doublage doit être évidemment la traduction assez fidèle du message d'origine ; d'autre part, le message sonore doit tenir compte, notamment dans sa durée, de l'image transmise, puisque cette durée doit être sensiblement égale au temps pendant lequel le mouvement des lèvres du locuteur d'origine est perceptible. Cette double contrainte est schématisée par les flèches en tirets 13 et 14.

Bien que ces solutions donnent satisfaction à certains égards, elles posent encore de nombreux problèmes, qui tiennent au coût élevé de mise en oeuvre, aux difficultés propres aux émissions en direct (le doublage est difficilement envisageable) et surtout à leur faible acceptabilité psychosociologique. C'est avant tout le second problème que se propose de résoudre l'invention et l'on peut, pour cette raison, le préciser davantage.

Dans le cas du sous-titrage, on remplace une perception auditive immédiate par une perception visuelle qui suppose la lecture d'un texte, et cela ampute gravement la capacité de communication du médium. Dans le cas du doublage, les contraintes phonéticovisuelles soulignées plus haut sont telles que le contenu du message de doublage peut devenir sémantiquement inacceptable. C'est le cas notamment des textes littéraires, ou des discours politiques ou informatifs, dont la traduction n'est parfois qu'approximative.

En outre, et malgré le soin apporté à la synchronisation entre les mouvements de l'organe phonateur du locuteur et le message sonore perçu par le téléspectateur, il existe souvent un hiatus phonéticovisuel difficile à supporter.

L'invention a pour but de résoudre ce problème difficile. Pour cela, elle préconise de s'y prendre de la manière suivante. Au lieu de reproduire, sur le récepteur de télévision, l'écran visuel d'origine, on produit un écran visuel qu'on appellera "transcrit" et qui résulte d'une modification de l'image d'origine, cette modification étant déterminée

par l'écran sonore traduit. Quant à ce dernier, il est obtenu selon l'invention, non pas sous la forte contrainte phonético-visuelle soulignée plus haut, mais sous la contrainte principale de la fidélité de traduction.

Selon l'invention la modification de l'image d'origine s'effectue dans les zones où les organes phonateurs des locuteurs sont en mouvement perceptible. Ces domaines particuliers de l'image sont l'objet d'un traitement destiné à faire apparaître un signe qui sera dit "phono-visuel" et qui est animé d'un mouvement synchronisé non plus sur les voix d'origine des locuteurs comme dans l'art antérieur, mais sur les voix des locuteurs-traducteurs correspondants.

Le hiatus phonético-visuel, si gênant dans l'art antérieur, s'en trouve donc supprimé, puisque le mouvement perçu par le téléspectateur dans la zone des organes phonateurs des locuteurs, est, cette fois, directement lié au message sonore reproduit.

Naturellement, ce ou ces signes phono-visuels qui viennent modifier l'image d'origine, perturbent légèrement la qualité de celle-ci. Ils expriment somme toute le caractère linguistiquement artificiel de l'écran sonore transcrit. Mais on sait, par expérience, que le "vu" est moins signifiant que "l'entendu", de sorte que le téléspectateur s'accommode fort bien du caractère artificiel de certaines zones de l'image, et ceci d'autant mieux que cet artifice conduit à une meilleure qualité sémantique du message entendu.

Si l'on reprend le type de schémas des figures 1 et 2, le procédé de l'invention peut être illustré comme sur la figure 3. On y voit un écran sonore traduit ESt' réalisé sous faible contrainte (avec la seule contrainte sémantique 13, mais sans contrainte visuelle 14) ; cet écran sonore est combiné avec l'écran visuel d'origine EVo et l'écran sonore d'origine, pour former un écran visuel transcrit EVt, l'opération de combinaison étant symbolisée par le cercle 15.

De façon plus concrète, dans le procédé de l'invention, on s'y prend comme suit. Tout d'abord et de manière très générale, on effectue un certain nombre d'opérations que l'on trouve déjà dans des procédés connus travaillant par doublage des voies de son. Il est à peine besoin de rappeler à ce sujet que, dans tout un procédé de télévision concernant des programmes multilingues, on commence par former un signal vidéo correspondant à la scène à téléviser (qu'il s'agisse d'une prise de vue vidéo directe ou d'une image de téléfilm), on forme un signal audio correspondant aux paroles prononcées par les locuteurs intervenant dans la scène en question, on forme également des signaux audio de doublage provenant des locuteurs-traducteurs, on émet tous ces signaux sous forme d'un signal de télévision composite (vidéo et audio), soit par diffusion par ondes hertziennes, soit par câble, etc..., on reçoit ce signal composite sur un récepteur de télévision, lequel est apte à reconstituer une image de la scène en question à partir du signal vidéo et à restituer les paroles prononcées soit par les locuteurs d'origine, soit par les locuteurs traducteurs, à partir des signaux audio. Naturellement, divers signaux de synchronisation (de ligne, de trame, etc) sont également mis en oeuvre, ainsi que diverses voies sonores d'ambiance et de bruitage. Mais, comme ces signaux ne jouent pas de rôle essentiel dans la présente invention, ils seront passés sous silence dans la suite de la description.

Le procédé de l'invention reprend ces opérations connues et il est caractérisé par le fait que :

a) à la production :

- on effectue une analyse spatiale de l'image pour détecter la présence et définir l'emplacement de domaines phonateurs et l'on traduit cette analyse en un premier type de données,

- on effectue une analyse temporelle des intervalles phonateurs des locuteurs d'origine pour déterminer notamment le début et la fin de ces intervalles et l'on traduit cette analyse en un deuxième type de données,

- on effectue une analyse temporelle des intervalles phonateurs des locuteurs-traducteurs pour déterminer notamment le début et la fin de ces intervalles ainsi que l'évolution de leur activité de phonation et l'on traduit cette analyse en un troisième type de données,

- on rassemble ces trois types de données phonovisuelles pour constituer un code phonovisuel,

b) à l'émission, à la transmission ou à l'enregistrement :

- on associe par multiplexage ce code phonovisuel au signal de télévision composite précité, en vue de le transmettre ou l'émettre ou l'enregistrer,

c) à la réception :

- on sépare le code phonovisuel ainsi multiplexé du signal composite,

- on en extrait les données d'image traduisant l'emplacement des domaines phonateurs, les données de son relatives à la voie sonore d'origine et les données de son relatives aux voies sonores de traduction,

- on sélectionne l'une des voies sonores d'origine ou de traduction,

- en cas de sélection d'une des voies sonores de traduction, on forme à partir des données d'image et des données de son correspondant tant à la voie sonore d'origine qu'à la voie sonore solutionnée, au moins un signe phonovisuel prenant place dans l'image aux emplacements des domaines phonateurs, ce signe étant généré au moyen notamment de données reçues,

- on affiche sur l'écran du récepteur non pas l'image d'origine mais une image modifiée par ce signe phonovisuel aux fins, soit de diminuer le hiatus phonovisuel entre l'image et le son perçus par le téléspectateur, soit de permettre l'affectation non ambiguë d'une voie entendue, à un locuteur vu.

Le ou les signes phonovisuels utilisés dans l'invention peuvent être de formes très diverses. Selon une variante avantageuse, on utilise deux signes phonovisuels :

- un premier signe en forme de voile défini dans sa position et sa grandeur par les données du premier type et du second type,

- un second signe combiné au précédent et défini par les données du troisième type et notamment une donnée liée à l'activité phonique du locuteur-traducteur, ce second signe créant un effet visuel cohérent avec la voie entendue par le téléspectateur.

Selon un mode de réalisation, pour former le voile en question, on prend la valeur moyenne de la luminance de l'image à l'intérieur d'un domaine phonateur, on mémorise cette valeur moyenne, et, sur une image ultérieure, on effectue un fondu entre la valeur moyenne mémorisée et l'image ultérieure en question, le fondu allant croissant de la périphérie au centre du domaine.

Selon un autre mode de réalisation, avantageusement combiné au précédent, pour former le second signe phonovisuel, on agit sur les signaux de chrominance de l'image.

Selon une autre caractéristique de l'invention, le téléspectateur peut régler à sa guise l'ampleur des signes phonovisuels apparaissant sur son ré cepteur.

Selon une autre variante, plus élaborée, on peut mémoriser périodiquement l'image du domaine phonateur d'origine et par un traitement d'image approprié, modifier cette image en liaison avec le signal sonore de traduction associé.

De toute façon, les caractéristiques de l'invention apparaîtront mieux après la description qui suit, d'exemples de réalisation donnés à titre explicatif et nullement limitatif. Cette description se réfère à des dessins annexés, sur lesquels :

- la figure 1, déjà décrite, illustre le procédé de sous-titrage selon l'art antérieur,

- la figure 2, également décrite, illustre le procédé de doublage selon l'art antérieur,

- la figure 3, déjà décrite, représente symboliquement le procédé de l'invention,

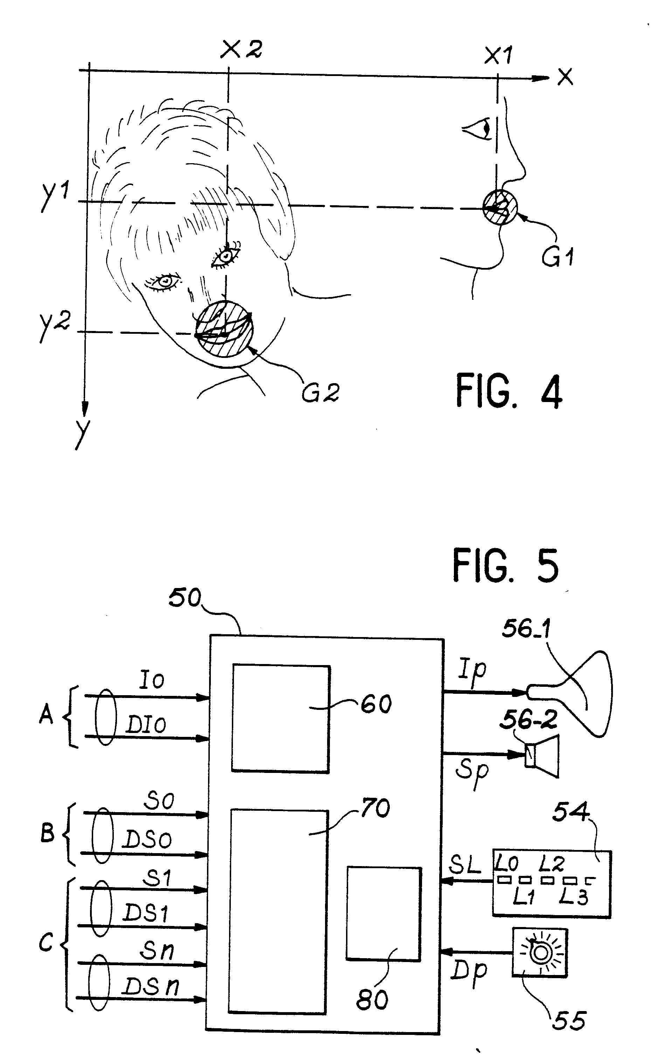

- la figure 4 est un schéma illustrant la caractérisation des domaines phonateurs d'une image,

- la figure 5 est un schéma synoptique d'un récepteur pour la mise en oeuvre du procédé de l'invention,

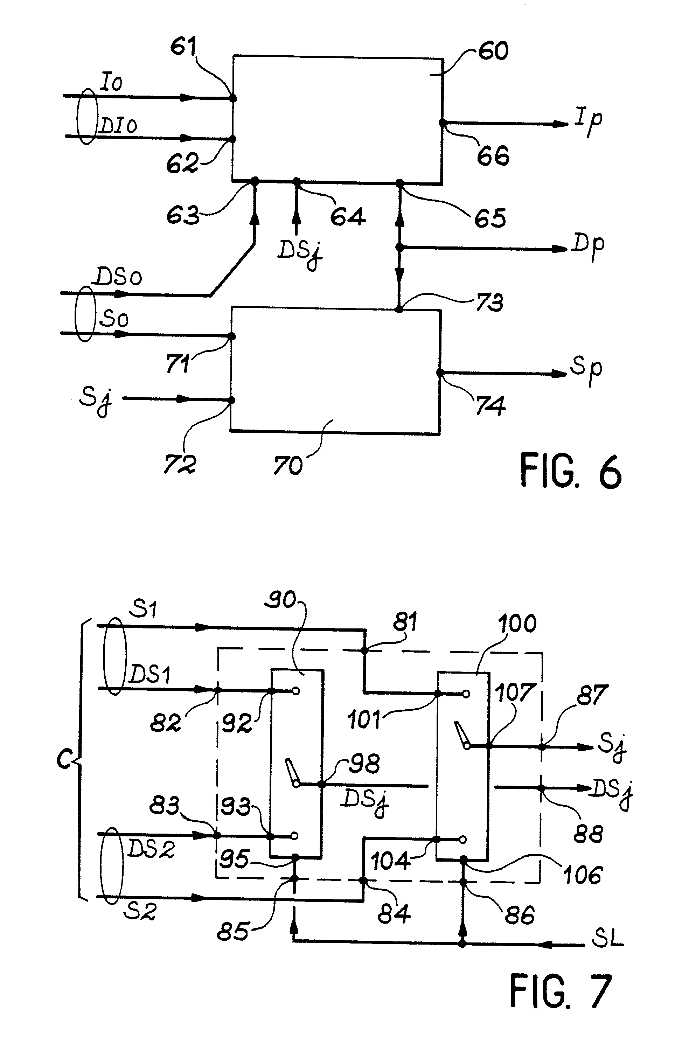

- la figure 6 montre un détail de ce récepteur avec ses deux processeurs,

- la figure 7 montre un autre détail de ce récepteur avec un sélecteur de voie sonore,

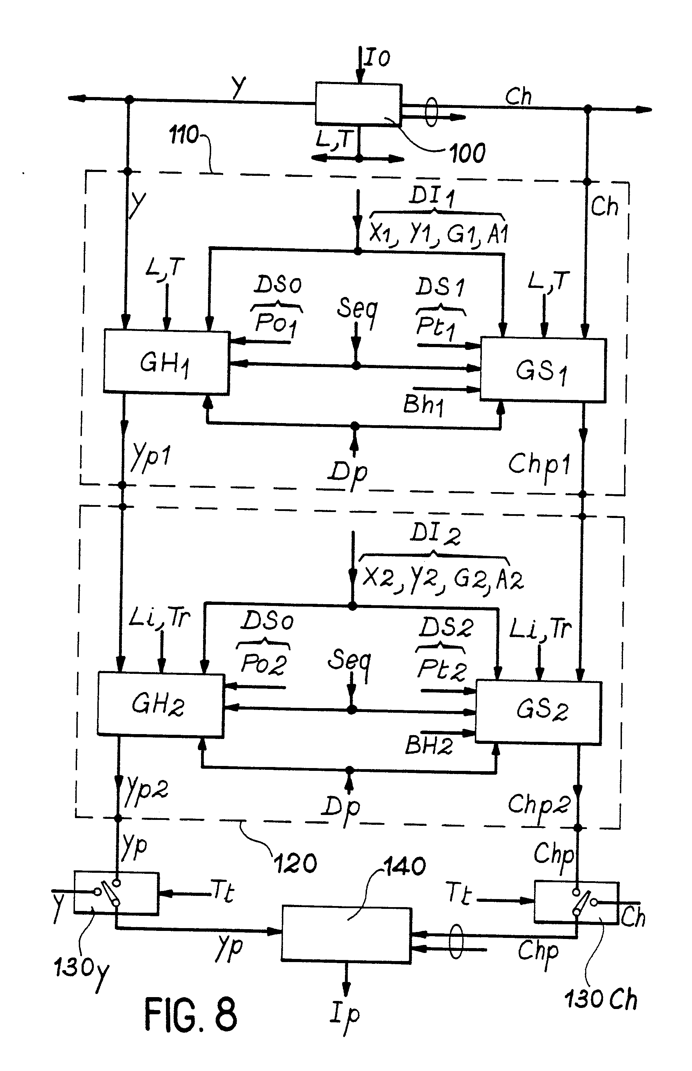

- la figure 8 illustre un mode particulier de réalisation d'un processeur.

La commande des signes phonovisuels mis en oeuvre dans l'invention pour créer l'image transcrite dépend du type de récepteur utilisé. On peut distinguer, à ce sujet, deux catégories de récepteurs :

- ceux qui sont dépourvus de mémoire et d'intelligence et qui reçoivent, à chaque image, toutes les données qui sont nécessaires pour guider leur comportement ;

- ceux qui sont dotés de mémoire et d'intelligence ; et qui disposent d'un logiciel approprié et sont capables, pour chaque plan, de faire un apprentissage des relations phonovisuelles particulières établies entre les locuteurs et la caméra pour ce plan. Ils en connaissent donc l'état et sont capables d'en suivre continûment l'évolution, soit à partir des données exogènes qu'ils reçoivent, soit à partir des données endogènes provenant par exemple du traitement de l'image reçue.

Dans la description qui suit, on s'attachera surtout au premier cas, le second s'en déduisant immédiatement.

La première phase du procédé de l'invention consiste à former les données aptes à guider le récepteur dans la formation des signes phonovisuels. On distinguera trois catégories de données, respectivement notées DIo, DSo et DSj, où DIo sont les données associées à l'image d'origine (Io), DSo les données associées à la voie sonore d'origine (So) et DSj les données associées à une voie sonore de traduction de rang j (Sj). On suppose qu'il y a n traductions disponibles et que l'on choisit la jième, avec j compris entre 1 et n.

A - Les données associées à l'image d'origine DIo

Ces données sont élaborées de préférence à partir de l'image d'origine, telle que vue sur un écran, et du signal vidéo qui lui correspond. Elles ont pour but :

- la classification des plans en plans à traiter et en plans à ne pas traiter ; il se peut en effet qu'il soit préférable de ne pas traiter visuellement certaines images ; cette donnée de traitement est notée Tt ;

- l'identification des plans à traiter : cette donnée est notée Pi, i étant le rang d'un plan ; dans l'invention, un plan est constitué d'une certaine configuration de locuteurs dans le champ de la caméra ;

- l'identification d'une séquence de plans Pi, Pi + 1... pour que le processeur vidéo, à la réception, tienne compte des transitions de plan à plan ; cette donnée est notée Seq ;

- l'identification des locuteurs (actifs ou potentiels) d'un plan ; cette identification se traduit par des données I1, I2, I3... classées, le cas échéant, par ordre d'importance ;

- la localisation, par rapport à l'écran, du centre du domaine phonateur ; ces données sont notées XiYi, pour le i$^{me}$ locuteur ;

- la détermination de la taille relative du domaine phonateur, soit Gi ; ces données peuvent être élaborées par des moyens faisant appel à la technique de la reconnaissance de forme et/ou par l'assistance d'un opérateur ;

- la détermination de l'attitude du locuteur ; la donnée correspondante est notée A.

La figure 4 illustre un exemple de paramètres utilisés pour la localisation de deux domaines phonateurs dans une image qui comprend deux locuteurs. Ces domaines ont pour centres les points de coordonnées X1Y1 et X2Y2 et des dimensions G1 et G2. Par "dimensions", il faut entendre soit un diamètre, soit le côté d'un carré, soit tout autre grandeur liée à l'étendue du domaine qui est à l'origine du son.

La donnée A permet de classer chaque locuteur dans l'une des classes suivantes :

- celle des locuteurs que l'on peut voir et entendre parler, s'ils parlent ;

- celle des locuteurs que l'on peut voir parler mais que l'on n'entend pas , s'ils parlent ;

- celle des locuteurs que l'on ne peut voir parler, mais que l'on entend, s'ils parlent, soit que le centre de locution n'est pas dans le champ de la caméra, soit qu'il est dans le champ, mais caché.

Le cas du locuteur que l'on entend parler mais que l'on ne voit pas est typiquement celui du locuteur qui est temporairement hors du champ visuel, tout en restant présent dans l'action. La voix dite "off", typique du documentaire, qui correspond à un locuteur étranger à l'action, donne évidemment lieu à traduction ; elle peut être repérée par un signe visuel spécifique, par exemple un carré en bas de l'écran.

Le cas du locuteur que l'on entend parler, que l'on voit, mais dont on ne voit pas l'organe phonateur est typiquement celui dont l'attitude corporelle est telle que le locuteur se trouve masqué par luimême ou par un objet.

B - Les données associées à la voie sonore d'origine DSo

Elles contiennent des informations relatives à l'identification de chaque locuteur potentiel de la scène. Pour chacun d'eux une variable d'état Po1, Po2, ... indique, selon sa valeur binaire, si le locuteur d'origine considéré parle ou se tait. Cette variable Po peut être obtenue soit par détection automatique sur la voie audio correspondante, soit par un opérateur à l'écoute.

C - Les données associées aux voies sonores de traduction DSj

Ces données comprennent :

- des données d'identification du locuteur-traducteur pour la langue j ; soit Ij1, Ij2, Ij3 ... ;

- des variables d'état Pt1, Pt2 indiquant si le locuteur-traducteur parle ou se tait ;

- des variables Bh1, Bh2, etc... qui décrivent l'activité phonique de chaque locuteur-traducteur telles que :

- le traducteur a la bouche fermée,

- le traducteur a la bouche ouverte,

- le traducteur est en train d'ouvrir la bouche,

- le traducteur est en train de fermer la bouche.

Cette variable Bh peut être aisément obtenue par un dispositif de détection lié physiquement au locuteur-traducteur.

Ces trois catégories de données sont rassemblées dans le tableau suivant. L'ensemble de ces données constitue un code phonovisuel, qui est associé aux signaux vidéo et audio habituels.

Tableau des diverses données d'image et de son

IMAGE

SON

voix
d'origine
(D So)

voix de
traduction
(D Sj)

Données générales :

Tt : traitement

Pi : identification
   des plans

Seq : séquences des
   plans à traiter

Données liées aux locuteurs

1$^{er}$ locuteur d'origine :

Io1 : identification

Ij1 : identification

DI1 {
X1,Y1 : coordonnées du
   centre du domaine
   phonateur

Po1 : intervalles
   phonateurs

Pt1 : intervalles
   phonateurs

G1 : grandeur du
   domaine
   phonateur

Bh1 : activité
   phonique
   du locuteur
   traducteur

A1 : attitude du
   1er locuteur

2$^{ème}$ locuteur d'origine :

Io2 : identification

Ij2 : identification

DI2 {
X2,Y2 :

G2 : idem

Po2 : intervalles
   phonateurs

Pt2 : intervalles
   phonateurs

A2 :

Bh2 : activité
   phonique
   du locuteur
   traducteur

3$^{ème}$ locuteur

etc...

A

B

C

On va décrire maintenant les moyens à mettre en oeuvre pour traiter toutes ces données.

La figure 5, tout d'abord, montre symboliquement les diverses entrées-sorties d'un récepteur apte à mettre en oeuvre l'invention. On y trouve :

- une entrée de signal vidéo relatif à l'image d'origine, soit

Io,

- une entrée de données d'image d'origine, soit DIo,

- une entrée de signal audio relatif au son d'origine, soit So,

- une entrée de données de son d'origine, soit DSo,

- des entrées de signaux audio relatifs à différentes langues S1 à Sn,

- des entrées de données correspondantes DS1, ... DSn.

Le téléspectateur dispose d'un boîtier de commande 54 permettant de sélectionner une langue (soit la langue d'origine Lo, soit une langue j prise parmi n langues étrangères L1, L2,...). Un signal de sélection de langue SL est émis par ce boîtier.

Le téléspectateur dispose encore d'un second moyen de commande 55, qui lui permet de régler l'ampleur des signes phonovisuels apparaissant sur l'image transcrite qu'il observe. Le signal de commande correspondant est noté Dp.

Tous ces signaux ou données sont appliqués à un circuit 50 qui est formé, comme on le verra mieux sur les figures suivantes, d'un processeur vidéo 60, d'un processeur audio 70 et d'un sélecteur 80. Ce circuit 50 délivre un signal vidéo Ip et un signal audio Sp, qui sont appliqués sur un tube à rayons cathodiques et un haut-parleur 56 et définissent respectivement l'image et le son présentés au téléspectateur.

La figure 6 montre, plus en détail, les entrées-sorties des processeurs 60 et 70.

Le processeur vidéo 60 possède cinq entrées 61, 62, 63, 64, 65 qui reçoivent respectivement les signaux Io, DIo, DSo, DSj et Dp, et une sortie 66 qui délivre le signal d'image présentée Ip.

Le processeur audio 70 possède trois entrées 71, 72, 73 qui reçoivent les signaux So, Sj et Dp et une sortie 74 qui délivre le signal de son présenté Sp.

La figure 7 montre le sélecteur 80 qui possède six entrées 81, 82, 83, 84, 85 et 86 qui reçoivent respectivement les signaux S1, DS1, DS2, S2, et SL et deux sorties 87 et 88 qui délivrent respectivement le signal sonore Sj relatif à la langue j sélectionnée et les données associées DSj.

Ce sélecteur comprend un premier multiplexeur 90 à autant d'entrées de signal 92-93 que de langues disponibles (2 dans le cas illustré), ces entrées étant reliées aux entrées 82 et 83 recevant les données des diverses langues ; ce multiplexeur possède aussi une entrée de commande 95 reliée à l'entrée 85 d'où elle reçoit le signal de sélection SL ; il possède enfin une sortie 98 reliée à la sortie 88, où apparaissent les données sélectionnées DSj.

Le sélecteur comprend encore, de la même manière, un multiplexeur 100 à deux entrées 101 et 104 reliées aux entrées 81 et 84 et recevant d'elles les signaux de son des diverses langues S1, S2 (2 en l'occurrence) ; le multiplexeur comprend encore une entrée de commande 106 reliée à l'entrée 86, d'où elle reçoit le signal de sélection de langue ; il possède enfin une sortie 107 reliée à la sortie 87, où apparaît le signal sonore sélectionné Sj.

On va décrire maintenant un exemple de processeur vidéo dans le cas particulier où le signe phonovisuel introduit est une sorte de voile qui semble interposé entre l'organe phonateur des locuteurs et l'écran. Le demandeur désigne cet artifice phonovisuel par "voile de Babel".

L'usager qui suit un programme de télévision, dans une langue qui n'est pas la langue d'origine sélectionne cette langue d'écoute, ce qui a pour effet de faire apparaître ce voile. L'usager peut en ajuster certaines caractéristiques.

L'effet de ce voile est le suivant. Lorsqu'un locuteur d'origine parle, par exemple le locuteur identifié par la donnée I1, un halo se forme autour du centre de locution correspondant, dont les coordonnées sont X1Y1, avec une dimension fixée par G1. L'effet visuel est analogue à celui que l'on observe lorsque quelqu'un parle trop près d'une vitre et que de la buée apparaît. Le rôle de ce halo est d'identifier le locuteur qui parle, mais également de masquer l'essentiel des mouvements de sa bouche. Ce halo est formé principalement par traitement du signal de luminance au voisinage du point de coordonnées X1Y1. A l'intérieur d'un domaine défini par un générateur de forme, qui peut dépendre de la variable G fixant la grandeur du domaine phonateur et de la variable A reflétant l'attitude du locuteur, on calcule la valeur spatiale moyenne de l'image, on intègre cette valeur dans le temps, d'image à image, avec une constante de temps suffisante pour masquer le mouvement des lèvres, puis on effectue un "fondu enchaîné" entre ce signe et l'image d'origine, le fondu étant commandé :

- temporellement par la variable PO1 au début d'un intervalle de locution (passage de PO1 de 0 à 1), le halo apparaissant rapidement, tandis qu'à la fin (passage PO1 de 1 à 0), le halo ne s'évanouit que lentement,

- en amplitude, selon la variable Dp, pour masquer totalement le domaine de locution ou le laisser transparaître.

Lorsque le locuteur-traducteur associé, identifié par la donnée Ij1, commence à prononcer la traduction (passage de 0 à 1 pour Pt1) et si l'on voit parler le locuteur d'origine, un deuxième signe visuel vient se superposer au halo. Des moyens de synchronisation permettent, l'émission, de contrôler la valeur de l'intervalle de temps qui sépare le passage à 1 des variables PO1 et Pt1, et cela par introduction d'un retard fixe sur l'image et la voie sonore d'origine et de retards variables sur les voies de traduction. Le deuxième signe visuel est placé autour du même point de coordonnées X1Y1, et dépend également de G1 et de A1. Dans la description qui suit, on suppose que ce second signe est engendré dans un plan de chrominance.

Disposant de la donnée Bh1 qui définit le mouvement des lèvres du locuteur-traducteur, ce second signe peut évoluer, temporellement et spatialement, au rythme de Bh1, recréant de ce fait un effet psychovisuel cohérent avec la voix entendue.

Comme déjà dit, l'usager, par la variable Dp, dispose d'un moyen pour ajuster, selon son goût et les circonstances, l'ampleur des signes visuels présentés, telle que leur taille, leur luminance ou leur chrominance, etc...

Dans cet exemple de réalisation, qui utilise les signaux de luminance et ceux de chrominance, le processeur vidéo se présente comme illustré sur la figure 8. Il comprend tout d'abord un séparateur vidéo 100, qui reçoit le signal vidéo d'origine Io et qui délivre, sur trois sorties, le signal de luminance Y, le signal de chrominance Ch (formé en fait de deux composantes) et les signaux de synchronisation de ligne et de trame L et T.

Le processeur comprend ensuite une pluralité de voies de traitement, chacune affectée à un locuteur. Le cas illustré comporte deux telles voies 110 et 120, mais ceci n'est évidemment qu'un exemple. Comme ces deux voies sont identiques, on ne décrira que la première, dont les références sont affectées d'un indice 1, les mêmes composants sont utilisés pour la seconde, mais avec l'indice 2.

Cette première voie comprend :

- un générateur de halo GH1, qui reçoit le signal de luminance Y, les signaux de synchronisation de ligne et de trame L, T, les données d'image DI1 relatives au premier locuteur, (qui comprennent les données X1Y1, G1, A1 déjà définies), une donnée de son d'origine, à savoir PO1, la donnée de séquencement Seq et enfin la donnée de réglage Dp ; ce générateur de halo délivre un signal de luminance modifié Yp1 ;

- un générateur de signe GD1, qui reçoit le signal de chrominance Ch, les signaux de synchronisation de ligne et de trame L, T, la variable de séquencement Seq, les données DI1 (X1, Y1, G1, A1), des données de son comme Pt1 et Bh1 et la donnée de réglage Dp ; ce second générateur délivre un signal de chrominance modifié Chp1.

Le processeur comprend encore un premier aiguillage 130Y, qui reçoit le signal de luminance d'origine Y, et les signaux de luminance modifiés Yp1, Yp2 et qui délivre l'un ou l'autre de ces signaux, selon la valeur de la donnée Tt qui détermine si le traitement doit avoir lieu ou non.

Le processeur comprend un second aiguillage 130Ch, identique au précédent, mais affecté aux signaux de chrominance (d'origine ou modifiés).

Enfin, le processeur comprend un mélangeur 140 à deux entrées recevant Yp et Chp et une sortie délivrant le signal vidéo Ip à présenter au tube cathodique.

## Revendications

1. Procédé de télévision pour programmes multilingues, dans lequel : on forme un signal vidéo correspondant à une scène comprenant au moins un locuteur, on forme un signal audio correspondant aux paroles prononcées par les locuteurs de la scène, on forme également des signaux audio de doublage en diverses langues provenant de locuteurs-traducteurs, on émet, transmet ou enregistre et relit un signal de télévision composite rassemblant ce signal vidéo et ces signaux audio, on reçoit ce signal composite sur un récepteur de télévision apte à reconstituer une image de la scène à partir du signal vidéo et à restituer les paroles prononcées soit par les locuteurs d'origine, soit par les locuteurs-traducteurs, à partir des signaux audio, ce procédé étant caractérisé par le fait que :

a) à la production :

- on effectue une analyse spatiale de l'image pour détecter la présence et définir l'emplacement de domaines phonateurs et l'on traduit cette analyse en un premier type de données,

- on effectue une analyse temporelle des intervalles phonateurs des locuteurs d'origine pour déterminer notamment le début et la fin de ces intervalles et l'on traduit cette analyse en un deuxième type de données,

- on effectue une analyse temporelle des intervalles phonateurs des locuteurs-traducteurs pour déterminer notamment le début et la fin de ces intervalles ainsi que l'évolution de leur activité de phonation et l'on traduit cette analyse en un troisième type de données,

- on rassemble ces trois types de données phonovisuelles pour constituer un code phonovisuel,

b) à l'émission, à la transmission ou à l'enregistrement :

- on associe par multiplexage ce code phonovisuel au signal de télévision composite précité, en vue de le transmettre ou l'émettre ou l'enregistrer,

c) à la réception :

- on sépare le code phonovisuel ainsi multiplexé du signal composite,

- on en extrait les données d'image traduisant l'emplacement des domaines phonateurs, les données de son relatives à la voie sonore d'origine et les données de son relatives aux voies sonores de traduction,

- on sélectionne l'une des voies sonores d'origine ou de traduction,

- en cas de sélection d'une des voies sonores de traduction, on forme à partir des données d'image et des données de son correspondant tant à la voie sonore d'origine qu'à la voie sonore solutionnée, au moins un signe phonovisuel prenant place dans l'image aux emplacements des domaines phonateurs, ce signe étant généré au moyen notamment de données reçues,

- on affiche sur l'écran du récepteur non pas l'image d'origine mais une image modifiée par ce signe phonovisuel aux fins, soit de diminuer le hiatus phonovisuel entre l'image et le son perçus par le téléspectateur, soit de permettre l'affectation non ambiguë d'une voie entendue, à un locuteur vu.

2. Procédé selon la revendication 1, caractérisé par le fait que les données du premier type relatives à l'image comprennent, en tout ou partie :

- des données déterminant si un plan image est ou n'est pas à traiter selon la revendication 1,

- des données identifiant des séquences de plans à traiter,

- des données identifiant chaque locuteur d'un plan-image,

- une donnée binaire d'état pour chaque locuteur indiquant si ce locuteur parle ou se tait,

- une donnée binaire d'état, pour chaque locuteur qui parle, liée à son activité phonique vue,

- des données définissant les coordonnées des centres des domaines phonateurs, ou permettant d'en suivre l'évolution,

- des données relatives à la taille des domaines phonateurs, ou permettant d'en suivre l'évolution.

3. Procédé selon la revendication 1, caractérisé par le fait que les données du troisième type relatives à la voie sonore de traduction comprennent, en tout ou partie :

- des données d'identification des locuteurs-traducteurs,

- une donnée d'état binaire pour chaque locuteur-traducteur indiquant si ce locuteur-traducteur parle ou se tait,

- une donnée liée à l'activité phonique de chaque locuteur-traducteur.

4. Procédé selon la revendication 1, caractérisé par le fait que l'on utilise deux signes phonovisuels :

- un premier signe phonovisuel en forme de voile défini dans sa position et sa grandeur par les données du premier type, et du second type, ce premier signe masquant le hiatus,

- un second signe phonovisuel combiné audit voile et défini par les données du troisième type liées aux locuteurs-traducteurs et notamment à la donnée liée à l'activité phonique du locuteur-traducteur, ce second signe créant un effet visuel cohérent avec la voix entendue par le téléspectateur.

5. Procédé selon la revendication 4, caractérisé par le fait que pour former le voile en question, on prend la valeur moyenne de la luminance de l'image à l'intérieur d'un domaine phonateur, on mémorise cette valeur moyenne, et, sur une image ultérieure, on effectue un fondu entre la valeur moyenne mémorisée et l'image ultérieure en question, le fondu allant croissant de la périphérie au centre du domaine.

6. Procédé selon la revendication 4, caractérisé par le fait que, pour former le second signe phonovisuel, on agit sur le signal de chrominance de l'image.

7. Procédé selon la revendication 1, caractérisé par le fait qu'on introduit un retard fixe sur l'image et la voie sonore d'origine et un retard réglable sur les signaux de son des voies de traduction.

8. Procédé selon la revendication 1, caractérisé par le fait que, dans le récepteur de télévision, on règle manuellement l'ampleur des signes phonovisuels apparaissant sur le récepteur.

0 179 701

EVo —— 10 —→ EVo
EG
ESo —— 11 —→ ESo
(12)

**FIG. 1**

EVo —— 10 —→ EVo
(14)
ESo —— 13 —→ ESt

**FIG. 2**

EVo —— 15 —→ EVt
ESo —— 13 —→ ES'␣t

**FIG. 3**

**FIG. 4**

**FIG. 5**

FIG. 6

FIG. 7

FIG. 8

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int. Cl 4) |
|---|---|---|---|
| A | US-A-4 405 944 (C. EILERS) --- | | H 04 N 7/08 |
| A | RUNDFUNKTECHNISCHE MITTEILUNGEN, vol. 20, no. 4, août 1976, pages 138-146, Hamburg, DE; F. PILZ: "TEchniken zur Übertragung von Untertiteln in Fernsehprogrammen, insbesondere zur wahlweisen Verwendung beim Zuschauer" ----- | | |

DOMAINES TECHNIQUES
RECHERCHES (Int. Cl.4)

H 04 N

Le présent rapport de recherche a été établi pour toutes les revendications

| Lieu de la recherche | Date d'achèvement de la recherche | Examinateur |
|---|---|---|
| LA HAYE | 14-01-1986 | VERSCHELDEN J. |